# EUROPEAN PATENT SPECIFICATION

(11) **EP 2 170 514 B1**
(45) Date of publication and mention of the grant of the patent: **29.05.2013**
(21) Application number: 08768740.6
(22) Date of filing: 25.06.2008
(51) Int. Cl.: B01L 3/00

(54) **MULTI-MATERIAL MICROPLATE AND METHOD**
AUS MEHREREN MATERIALIEN BESTEHENDE MIKROPLATTE UND VERFAHREN
MICROPLAQUE MULTI-MATÉRIAUX ET PROCÉDÉ

(30) Priority: 27.06.2007 US 946429 P
(43) Date of publication of application: 07.04.2010
(73) Proprietor: Life Technologies Corporation, Carlsbad, CA 92008 (US)
(72) Inventor: LIU, David, M., Los Altos, CA 94024 (US); LIM, Gary, San Francisco, CA 94116 (US); YEE, Victor, H., Castro Valley, CA 94552 (US)
(74) Representative: Wöhler, Christian
(86) International application number: PCT/US2008/007860
(87) International publication number: WO 2009/005641

(56) References cited:
- EP-A2- 1 161 994
- WO-A1-01/52988
- US-A- 6 051 191
- US-A- 6 051 191
- US-A1- 2002 151 045
- US-A1- 2004 149 659
- US-A1- 2005 280 811
- US-B2- 6 783 732

## Description

### INTRODUCTION

Currently, genomic analysis, including that of the estimated 30,000 human genes is a major focus of basic and applied biochemical and pharmaceutical research. Such analysis may aid in developing diagnostics, medicines, and therapies for a wide variety of disorders. However, the complexity of the human genome and the interrelated functions of genes often make this task difficult. There is a continuing need for methods and apparatus to aid in such analysis.

In particular, microplates useful for the conducting of polynucleotide amplification have been used extensively. However, in many cases, as the well density is increased, or additional characteristics varied, the dimensional uniformity of these microplates has waned. Accordingly, the present teachings seek to overcome the deficiencies of the prior art and provide a microplate well suited for testing in today's analytical environment.

The invention relates to a microplate assembly according to claim 1 and a method of making a microplate assembly according to claim 9. Preferred embodiments are described by dependent claims 2-8 and 10-11.

European patent application with publication number EP 1 161 994 A2 discloses a microtiter plate with a plate of a rigid plastic material and multiple receptacles of a plastic material that is suitable for PCR. The receptacles are connected permanently to the plate by direct injection of the plastic material to the plate.

United States patent application number with publication number US 2004/0149659 discloses a well for processing a fluid having a hollow tube, a sealing ring, and a filter. The sealing ring has an outer surface that presses against an inner surface of the hollow tube and the filter touches the bottom surface of the sealing ring.

### DRAWINGS

The skilled artisan will understand that the drawings, described herein, are for illustration purposes only.

FIG. 1 is a side perspective view, with portions in cross-section, of a multi-material microplate assembly according to some embodiments of the present teachings;

FIG. 2 is a cross-sectional view of one of the wells of the multi-material microplate assembly according to FIG. 1;

FIG. 3 is a top plan view of one of the wells of the multi-material microplate assembly according to FIG. 1, with the hidden well insert rim shown by dashed lines;

FIG. 4 is a top perspective view, with portions in cross-section, of a multi-material microplate assembly according to some embodiments of the present teachings;

FIG. 5 is a bottom perspective view of the multi-material microplate assembly according to FIG. 1;

FIG. 6 is a partial perspective view of a microplate base structure according to some embodiments of the present teachings;

FIG. 7 is a perspective view, with portions hidden, of a well insert according to some embodiments of the present teachings;

FIG. 8 is a top perspective view, partially exploded, of a multi-material microplate assembly according to some embodiments of the present teachings;

FIG. 9 is a cross-sectional view of the multi-material microplate assembly according to FIG. 8;

FIG. 10 is a perspective view of a well insert according to some embodiments of the present teachings;

FIG. 11 is a top perspective view, partially exploded, of a multi-material microplate assembly using the well insert of FIG. 10 according to some embodiments of the present teachings;

FIG. 12 is a cross-sectional view of the multi-material microplate assembly according to FIG. 11;

FIG. 13 is a cross-sectional view of the multi-material microplate assembly according to some embodiments of the present teachings;

Fig. 14 is top perspective view of one of the well inserts of the multi-material microplate assembly according to FIG. 13; and

FIGS. 15-17 are top perspective views showing a plurality of well inserts assembled into arrangements to permit joining of the plurality of well inserts to a microplate base structure according to some embodiments of the present teachings.

### DESCRIPTION OF SOME EMBODIMENTS

The following description of some embodiments is merely exemplary in nature. Although the present teachings will be discussed in some embodiments as relating to polynucleotide amplification, such as PCR, such discussion should not be regarded as limiting the present teaching to only such applications.

The section headings and sub-headings used herein are for general organizational purposes only and are not to be construed as limiting the subject matter described in any way.

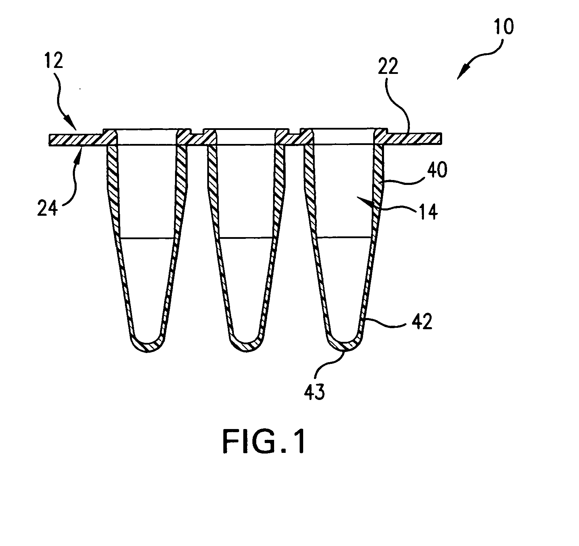

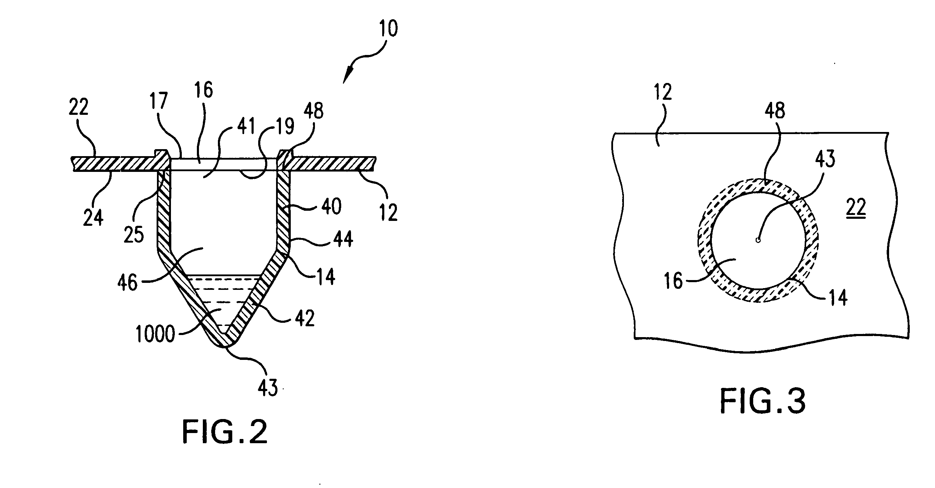

With particular reference to FIGS. 1-12, a microplate assembly 10, 100 is illustrated according to some various embodiments of the present teachings. Microplate assembly 10, 100 comprises a microplate base structure 12, 120 and a plurality of well inserts 14, 140 operably coupled adjacent a corresponding aperture 16, 160 formed in microplate base structure 12, 120. According to the invention, the plurality of well inserts 14, 140 are each configured to receive an assay, as discussed below therein.

It should be understood that, in some embodiments, assay 1000 can comprise any material that is useful in, the subject of, a precursor to, or a product of, an analytical method or chemical reaction. In some embodiments for amplification and/or detection of polynucleotides, assay 1000 comprises one or more reagents (such as PCR master mix, as described further herein); an analyte (such as a biological sample comprising DNA, a DNA fragment, cDNA, RNA, or any other nucleic acid sequence), one or more primers, one or more primer sets, one or more detection probes; components thereof; and combinations thereof. In some embodiments, assay 1000 comprises a homogenous solution of a DNA sample, at least one primer set, at least one detection probe, a polymerase, and a buffer, as used in a homogenous assay (described further herein). In some embodiments, assay 1000 can comprise an aqueous solution of at least one analyte, at least one primer set, at least one detection probe, and a polymerase. In some embodiments, assay 1000 can be an aqueous homogenous solution. In some embodiments, assay 1000 can comprise at least one of a plurality of different detection probes and/or primer sets to perform multiplex PCR, which can be useful, for example, when analyzing a whole genome (e.g., 20,000 to 30,000 genes, or more) or other large numbers of genes or sets of genes.

As will be described herein, microplate base structure 12, 120 and the plurality of well inserts 14, 140 are made of differing materials. In this regard, the material of microplate base structure 12, 120 can be selected to minimize warping during manufacture and/or later testing (e.g. PCR thermocycling). Similarly, the material of the plurality of well inserts 14, 140 can be selected to conform to industry standards and/or known material compatibilities in connection with Polymerase Chain Reaction (PCR) or other analytical method or chemical reaction.

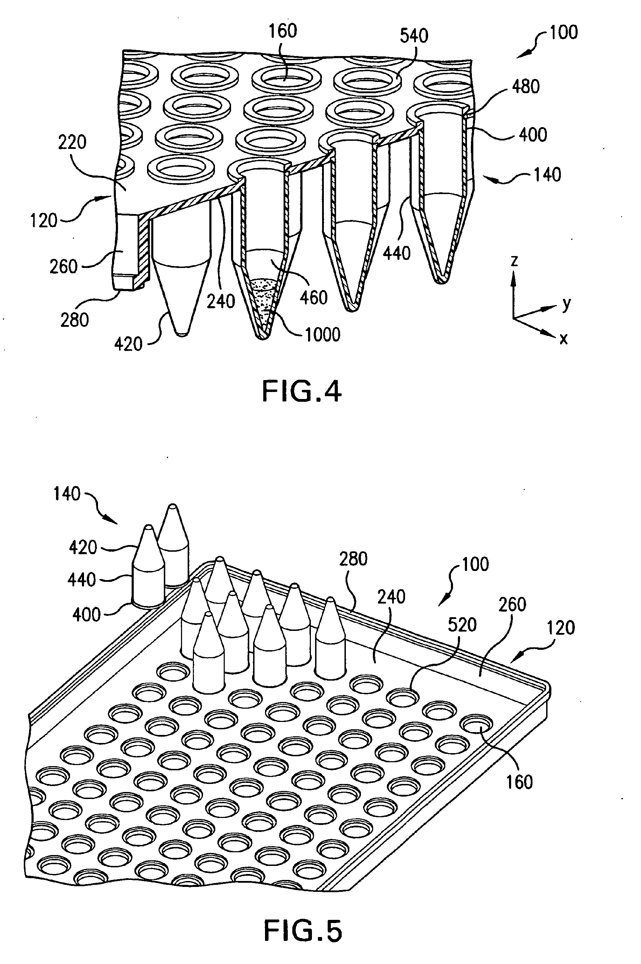

With reference to FIGS. 1-6, 8, 9, 11-13, and 16-18, microplate base structure 12, 120 can be substantially planar, having substantially planar upper and lower surfaces, wherein the dimensions of the planar surfaces in the x- and y-dimensions are substantially greater than the thickness of the substrate in the z-direction. In some embodiments, microplate base structure 12, 120 comprises a substantially planar construction having a first surface 22, 220 and an opposing S second surface 24, 240. Microplate base structure 12, 120 comprises a plurality of apertures 16, 160 formed therethrough for providing access to the well space 46, 460 within the well inserts 14, 140. Referring to FIGS. 1-3, the apertures 16 and well inserts 14 are manufactured in an aligned configuration to allow access to well space 46 through the aperture 16 in microplate base structure 12. In some embodiments, the apertures 16 and well inserts 14 are not directly structurally coupled as will be described in detail herein. Referring to FIGS. 4-6, 8, 9, 11, and 12, the plurality of apertures 160 formed through microplate base structure 120 are coupled with the plurality of well inserts 140, respectively, and the specific coupling solutions for these various embodiments will be described in detail herein.

In some embodiments thereof, microplate base structure 12, 120 comprises a downwardly extending sidewall 260 being generally orthogonal to first surface 220 and second surface 240, such as exemplified in FIG. 4, although not limited thereto. Skirt portion 280 can form a lip around sidewall 260 and can vary in height. Skirt portion 280 can facilitate alignment of microplate assembly 10, 100 on a thermocycler block. Additionally, skirt portion 280 can provide additional rigidity to microplate assembly 10, 100 such that during handling, filling, testing, and the like, microplate assembly 10, 100 remains rigid, thereby ensuring assay 1000, or any other components, disposed in each of the plurality of well inserts 14, 140 does not contaminate adjacent wells. In some embodiments, however, microplate assembly 10, 100 can employ a skirtless design depending upon user preference.

In some embodiments, microplate assembly 10, 100 can be from about 50 to about 200 mm in width, and from about 50 to about 200 mm in length. In some embodiments, microplate assembly 10, 100 can be from about 50 to about 100 mm in width, and from about 100 to about 150 mm in length. In some embodiments, microplate assembly 10, 100 can be about 72 mm wide and about 120 mm long.

In order to facilitate use with existing equipment, robotic implements, and instrumentation, the footprint dimensions of microplate assembly 10, 100, in some embodiments, can conform to standards specified by the Society of Biomolecular Screening (SBS) and the American National Standards Institute (ANSI), published January 2004 (ANSI/SBS 3-2004). In some embodiments, the footprint dimensions of microplate assembly 10, 100 are about 127.76 mm (5.0299 inches) in length and about 85.48 mm (3.3654 inches) in width. In some embodiments, the outside corners of microplate assembly 10, 100 comprise a corner radius of about 3.18 mm (0.1252 inches). In some embodiments, microplate assembly 10, 100 comprises a thickness of about 0.5 mm to about 3.0 mm. In some embodiments, microplate assembly 10, 100 comprises a thickness of about 1.25 mm. In some embodiments, microplate assembly 10, 100 comprises a thickness of about 2.25 mm. One skilled in the art will recognize that microplate assembly 10, 100 and skirt portion 280 can be formed in dimensions other than those specified herein.

Referring now to FIGS. 1-5, 7-12, 16 and 17, the plurality of well inserts 14, 140 can each comprise a generally tubular construction having an open top portion 40, 400 and a closed bottom portion 42, 420. At the outset, it is important to note that well inserts useful in connection with the present teachings can have any number of shapes and configurations, and be made of any size conducive to the testing being conducted. Notwithstanding, however, in some embodiments each of the plurality of well inserts 14, 140 can comprise a tubular main body portion 44, 440 interconnecting top portion 40, 400 and bottom portion 42, 420. Bottom portion 42, 420 can be a closed taper design terminating at a tip defining a narrowing well volume 46, 460 there inside having a predetermined volume. Each of the plurality of well inserts 14, 140 is illustrated having a constant wall thickness; however it should be appreciated that the wall thickness can be varied to achieve a desired structural integrity and/or thermal transmission rate.

According to some embodiments, as illustrated in FIGS. 1-5, 9, 11, and 12, 120, each of the plurality of well inserts 14, 140 can be substantially equivalent in size. The plurality of well inserts 14, 140 can have any cross-sectional shape. In some embodiments, as illustrated, each of the plurality of well inserts 14, 140 comprises a generally circular rim portion 48 disposed about the periphery of open top portion 40, 400. In some embodiments, each of the plurality of well inserts 14, 40 can comprise a draft angle of main body portion 44, 440 and/or bottom portion 42, 420, which provides benefits including increased ease of manufacturing and minimizing shadowing during excitation and/or detection processing steps. The particular draft angle is determined, at least in part, by the manufacturing method and the size of each of the plurality of well inserts 14, 140.

Referring to FIGS. 1-3, according to the present invention, the microplate assembly 10 comprises a microplate base support 12 having apertures 16 that are attached at its lower surface 24 to rim portions 48 of well inserts 14. In some embodiments, microplate base support 12 has an upper surface 22, a lower surface 24, and apertures 16 extending between an aperture entrance 17 in upper surface 22 and an aperture entrance 19 in lower surface 24. In some embodiments, each rim portion 48 is attached at generally planar portions 25 of the lower surface 24 of microplate base support 12. An aperture 16 in microplate base support 12 aligns with a top opening 41 of well insert 14 in assembly 10. Well insert 14 includes a tube body 44 having an upper tube body portion 40, a lower tube body portion 42, a top opening 41 and an opposite distal closed tip end 43. In some embodiments, well insert 14 is directly coupled exclusively to lower surface 24 of microplate base support 12, and well insert 14 is not coupled through or inside an associated aperture 16 of microplate base support 12. In some embodiments, tube body 44 can have uniform wall thickness in upper tube body portion 40. In some other embodiments, tube body 44 has uniform thickness in both body portions 40 and 42 between top opening 41 and distal closed tip end 43.

Still referring to FIGS. 1-3, in some embodiments microplate assembly 10 is manufactured by multi-component molding techniques that allow for the attachment of lower surface 24 of microplate base support 12 to rim portions 48 of well inserts 14. In various embodiments, a two-component molding technique or "twin-shot" technique, or a co-injection technique, can be used. In some embodiments, the multi-component molding process can be performed using injection molding presses capable of in-mold finishing and assembly of parts. These presses can be configured for multi-shot or simultaneous-shot injection of polymer melts into configured cavities within the mold to form consolidated diverse parts without secondary operations outside the mold being required to mold the multi-part assembly. According to some embodiments, well inserts 14 are shot first in a cavity defined in a mold die or face of a multi-shot molding press. Then, microplate base support 12 is formed in situ within the same mold in a cavity defined by a separate mold die or face, such that the shot contacts rim portions 48 of well inserts 14 whereby the melt forms lower surface 24 of microplate base support 12 in coupled contact with rim portions 48 of well inserts 14. The sequence of the shots also can be reversed, or simultaneous. With benefit of the teachings on the part structures and details thereof provided herein for microplate assembly 10, the two-step injection molding process can be performed by customizing and adapting conventional injection multi-shot press technologies that are designed for two-shot molding operations.

According to various embodiments described herein that incorporate a raised rim around each well opening as an integral part of the microplate base support, increased stiffness can be achieved. Each raised rim or collar can reinforce each opening or hole for each respective well due to the increased thickness. Collectively, the raised rims stiffen the entire microplate base support. Without the raised rims, the microplate base support would essentially be a flat plate weakened by the number of openings or holes for the wells.

According to various embodiments described herein that utilize similar polymer resins to form the microplate base support and wells, a complete melt and bond can be achieved between the two components. In embodiments where the wells are bonded to the microplate base support, no interlocking feature is required to ensure that the wells are affixed to the microplate base support.

According to various embodiments described herein that utilize similar polymer resins to form the microplate base support and wells, the sequence of which of the two components is molded first and which component is overmolded or subsequently molded to the first component is inconsequential. This is particularly the case when using similar polymer resins having similar melt temperatures, for example, melt temperatures that are within 4°C of each other or within 3°C of each other, or less than 2°C apart. If the components are formed from two dissimilar polymer resins with much different melt temperatures, for example, greater than 5°C apart from one another, then an established molding sequence can be necessitated, for example, wherein the component formed from the polymer resin with the higher melt temperature is molded first followed by overmolding the second component formed from the polymer resin with the lower melt temperature.

According to various embodiments described herein that utilize a filled polypropylene to form the microplate base support, the microplate base support can be more thermally stable and exhibit very little warping before and after thermocycling, for example, when compared to virgin polypropylene.

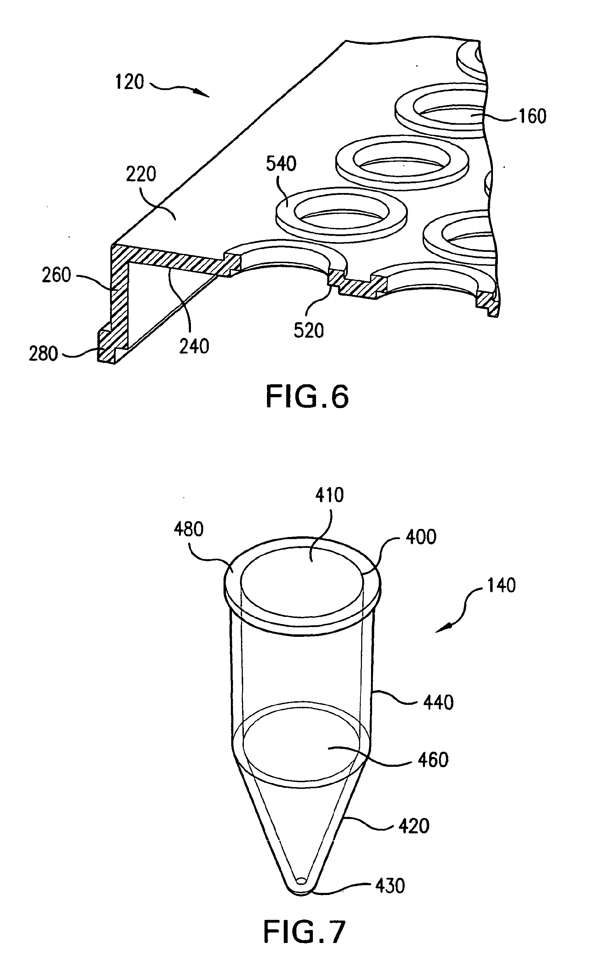

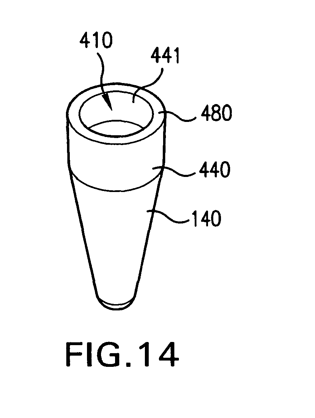

With reference to FIGS. 4-14, in other microplates, each of a plurality of well inserts 140 is formed separate from microplate base structure 120 and later joined together to form microplate assembly 100. To this end, each of plurality of well inserts 140 can be inserted or otherwise coupled to microplate base structure 120. In some microplates, as illustrated in FIGS. 4-7, each of the plurality of well inserts 140 can comprise a circular rim portion 480 extending orthogonally about top portion 400. Circular rim portion 480 can define an outer diameter that is greater than an outer diameter of main body portion 440 of well insert 140. Likewise, in some microlates, the microplate base structure 120 can comprise a depression 520 (FIGS. 5 and 6) formed within second surface 240 and about aperture 160. An outer diameter of depression 520 can be such to permit receipt of circular rim portion 480 of well insert 140 therein. It should be appreciated that such receipt can be a press fit, interference fit, or free and unencumbered fit. Aperture 160 of microplate base structure 120 can further include a raised rim portion 540 extending about aperture 160 and above first surface 220. In some embodiments, an outer diameter of raised rim portion 540 can be greater than an inner diameter of depression 520 to permit adequate material quantity therebetween. Additionally, in some embodiments, well insert 140 can be disposed within depression 520 such that a top surface of rim portion 480 is spaced well below a top surface of raised rim portion 540 to at least in part provide a known and consistent top surface of raised rim portion 540 for improved sealing with a sealing cover (not shown).

Referring again to FIGS. 4-7, during assembly, in some embodiments, microplate base structure 120 can be inverted such that each of the plurality of well inserts 140 can be conveniently placed and positioned from above, on to second surface 240 (FIG. 5). FIG. 7 also illustrates the top opening 410, encircled by rim 480, and closed bottom tip 430 at the opposite distal end of well insert 140.

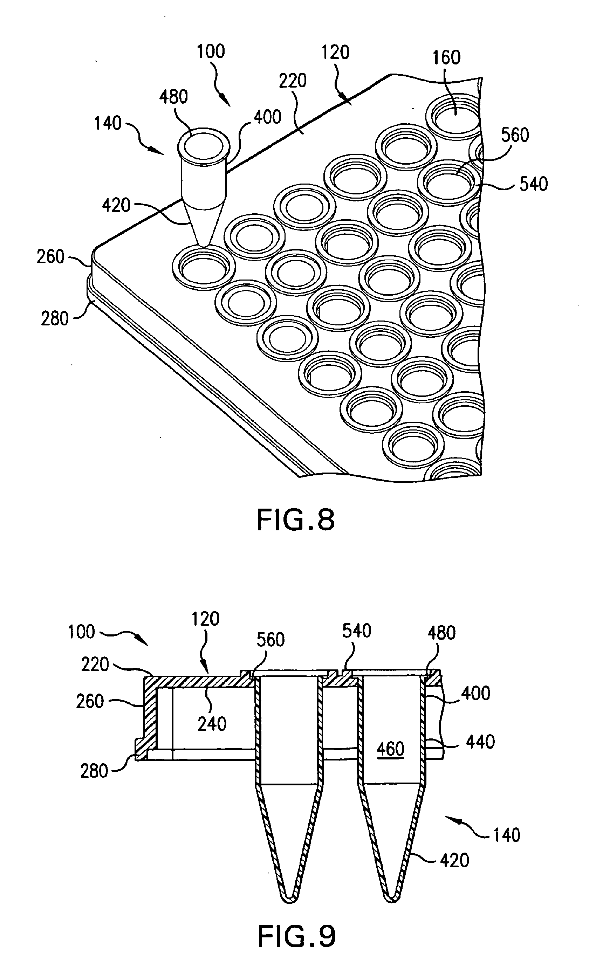

With reference to FIGS. 8-12, in some embodiments, microplate base structure 120 can comprise a depression 560 (FIGS. 8, 9, 11, and 12) formed within raised rim portion 540 and about aperture 160 to permit insertion of each of the plurality of well inserts 140 into apertures 160 of microplate base structure 120 from above (FIG. 8). As such, an inner diameter of depression 560 is greater than an inner diameter of aperture 160. Moreover, inner diameter of aperture 160 is sized to permit insertion of bottom portion 420 and main body portion 440 of well insert 140 therethrough and depression 560 is sized to permit receipt of rim portion 480 therein. It should be appreciated that such receipt of rim portion 480 within depression 560 can be a press fit, interference fit, or free and unencumbered fit. In some embodiments, rim portion 480 can be disposed such that a top surface thereof is below a top surface of raised rim portion 540. In other words, in some embodiments, well insert 140 can be disposed within depression 560 such that a top surface of rim portion 480 is spaced well below a top surface of raised rim portion 540 to at least, in part, provide a known and consistent top surface of raised rim portion 540 for improved sealing with a sealing cover.

Referring to FIGS. 4-12, for example, it should be appreciated that according to the invention, the plurality of well inserts 140 can be molded to microplate base structure 120 using insert molding. Similar bonding techniques can be used in connection with the embodiments of FIGS. 1-3. In other microplates, each of the plurality of well inserts 140 can be ultrasonically welded to form reliable and convenient weld therebetween. In other microplates, each of the plurality of well inserts 140 can be laser welded. In some embodiments, each of the plurality of well inserts 140 can be insert molded such that either microplate base structure 120 is inserted into a mold cavity prior to molding of the plurality of well inserts 140 or, alternatively, the plurality of well inserts 140 are inserted into a mold cavity prior to molding of microplate base structure 120. In other microplates, each of the plurality of well inserts 140 can be bonded, using glue, an adhesive, epoxy, or another bonding agent, to microplate base structure 120.

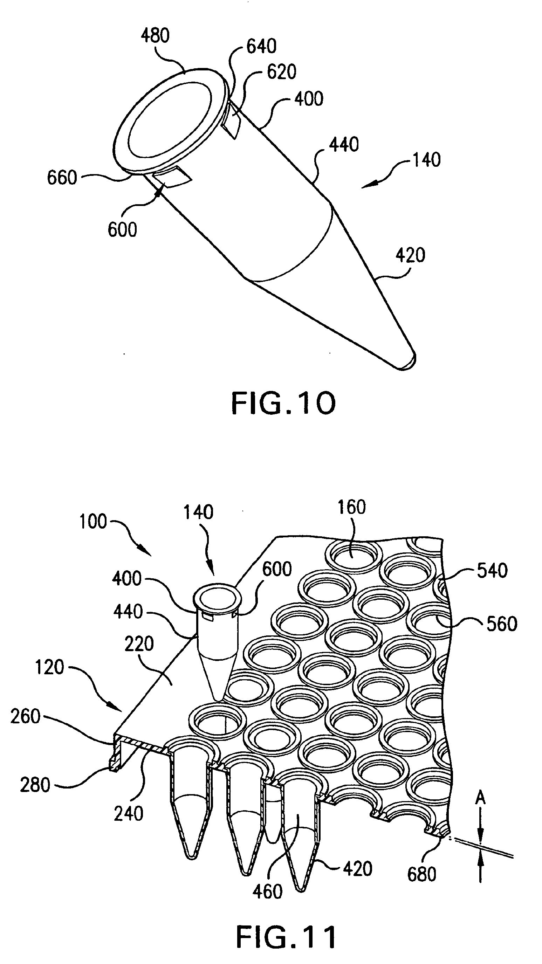

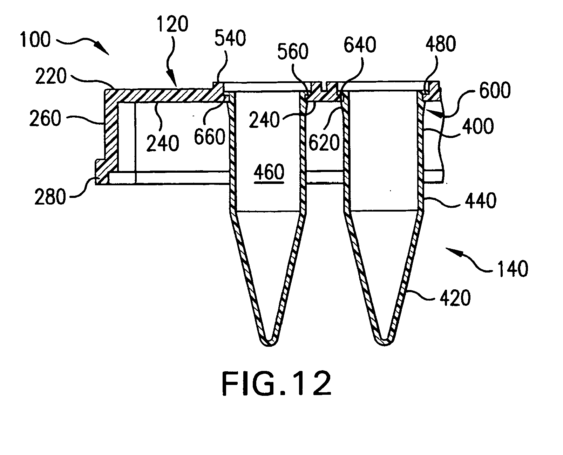

With particular reference to FIGS. 10-12, each of the plurality of well inserts 140 can further be coupled or otherwise joined to microplate base structure 120 using any one of a number of mechanical connections. For example, in some embodiments, each of the plurality of well inserts 140 can comprise one or more retaining barbs 600 extending from main body portion 440. In some embodiments, retaining barbs 600 can comprise an angled or sloped surface 620 extending upwardly from main body portion 440 at an angle sufficient to form a return surface 640 (see, in particular, FIG. 12). Return surface 640 can be generally orthogonal to main body portion 440 and spaced apart from an underside 660 of rim portion 480 to accommodate a thickness (labeled A in FIG. 11) of a ledge 680 formed as a result of depression 560. As such, during insertion, well inserts 140 are inserted from above such that bottom portion 420 and main body portion 440 pass through aperture 160 of microplate base structure 120. Once retaining barbs 600 begin to engage the smaller inner diameter of aperture 160, they cause main body portion 440 of well insert 140 to deflect inwardly until return surface 640 passes second surface 240 of microplate base structure 120 at which time microplate base structure 120 and retaining barbs 600 extend outwardly, thereby engaging return surface 640 with second surface 240 and retaining well insert 140 within aperture 160. It should be appreciated that variations can be made as to the size, shape, slope, number, and configuration of retaining barbs 600.

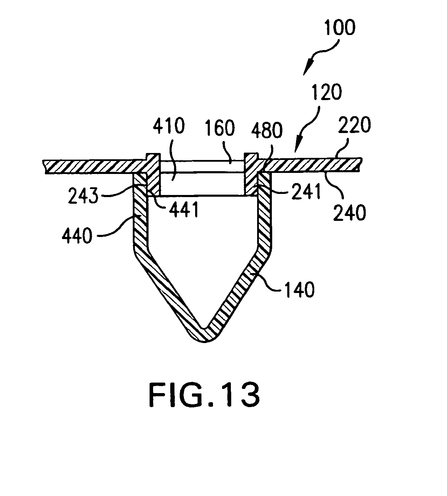

Referring to FIGS. 13-14, in some embodiments an insert molding process can be used as a means of assembly to attach tubes 140 to microplate base structure 120. In particular, a downward extending flange 241 is formed integral with bottom surface 220 of microplate base structure 120. The plate flange 241 and well opening 410 can be dimensioned such that the exterior surface 243 of flange 241 slidably receives and interfits with the inside surface 441 of well insert body (wall) 440 of well insert 140 at upper open end 410 thereof. As such, rim 480 seats on the lower surface 240 of microplate base structure 120 and laterally rests against flange 241 thereof, to provide a friction fit between microplate base structure 120 and the well inserts. The amount of material around the tube opening 410 can thereby be reduced.

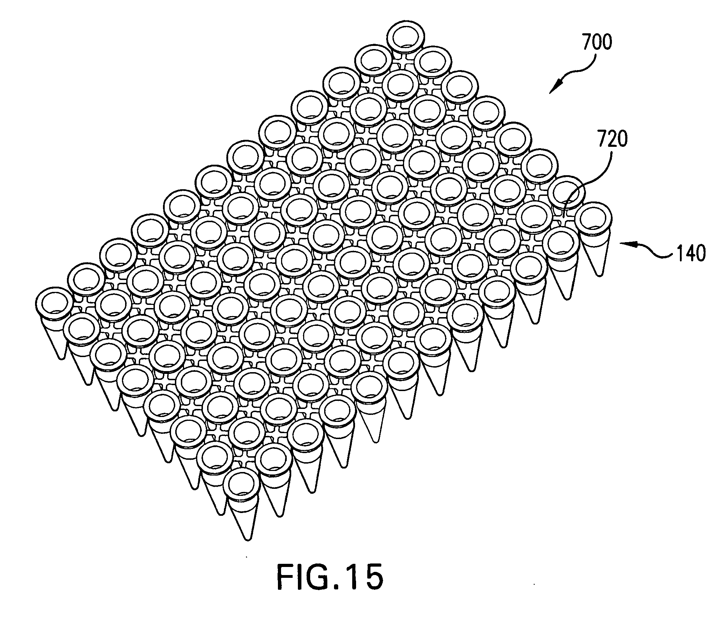

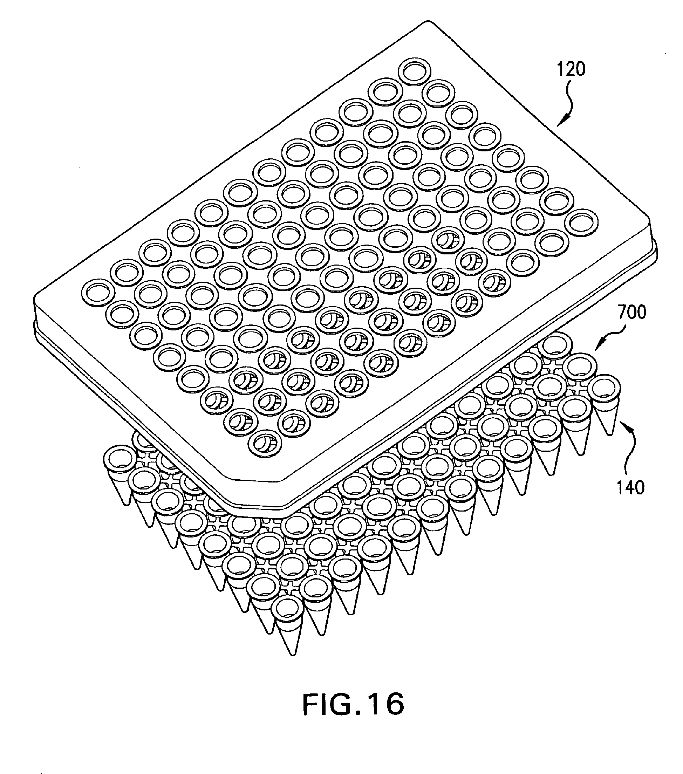

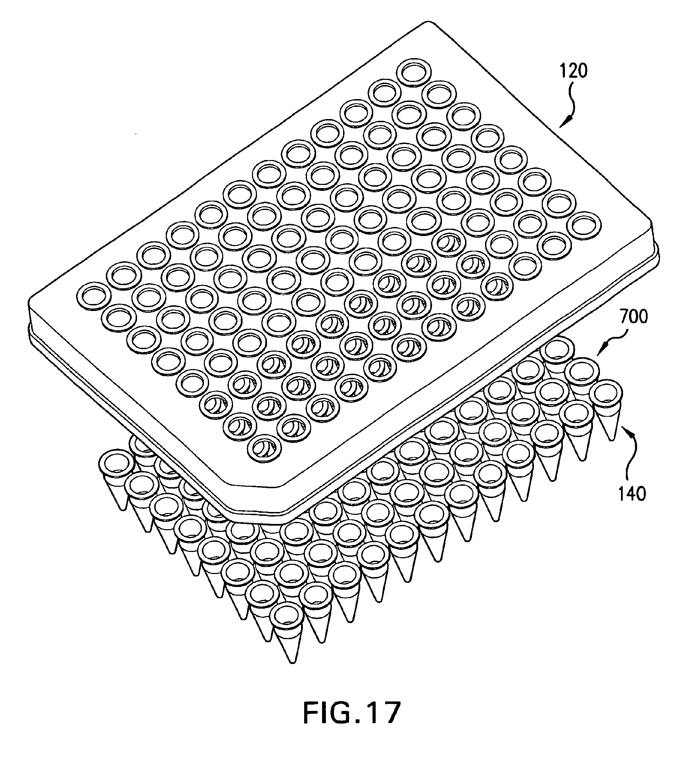

In some embodiments, as illustrated in FIGS. 15-17, the plurality of well inserts 140 can be assembled into convenient arrangements to permit the simple and reliable joining of the plurality of well inserts 140 to microplate base structure 120. That is, in some embodiments, as illustrated in FIG. 15, the plurality of well inserts 140 can be manufactured as a single web matrix 700. Web matrix 700 can be sized such that each of the plurality of well inserts 140 is correctly positioned relative to each other to quickly be joined with microplate base structure 120 as illustrated in FIG. 16. Web matrix 700 can comprise a plurality of interconnecting limbs 720 (FIG. 15) joining adjacent well inserts 140 together in spaced relationship. It should be understood that interconnecting limbs 720 can be of any shape conducive to reliably couple well inserts 140 to microplate base structure 120. In some embodiments, as illustrated in FIG. 17, interconnecting limbs 720 can be removed before, or after, coupling the plurality of well inserts 140 to microplate base structure 120. In some embodiments, interconnecting limbs 720 can be frangible.

Referring to FIGS. 1-14, in some embodiments, well inserts 14, 140 and microplate base structure 12, 120 are formed of a neat or non-filled polymer resin, or of a filled polymer resin. The well inserts can be formed of the same, or a similar material, as that used for the microplate base structure. In some embodiments, these parts can be formed of different polymer materials. The polymer resin should be suitable for injection molding and can be capable, in its finished condition, of withstanding microplate assembly process temperatures or thermal cycling anticipated for use of the assembly. In some embodiments, microplate base structure 12, 120 can be formed of glass-filled polypropylene or other polyolefin, which can impart rigidity and allow the support to be used with automated equipment. In some embodiments, well inserts 14, 140 can be formed of non-filled polypropylene or other polyolefin, which can be less rigid than the microplate base material.

Referring to FIGS. 1-14, in some embodiments, microplate base structure 12, 120 can be made of a material other than polypropylene to minimize effects from thermal cycling and to further promote adhesion with conventional sealing covers that can be disposed over microplate base structure 12, 120 to seal each well insert 14, 140. In some embodiments, a sealing cover can be sealed to raised rim portions 54, 540. By using a material other than polypropylene in microplate base structure 12, 120 to promote adhesion with a sealing cover, the likelihood of delamination of the sealing cover is reduced due to the reduced dimensional differences in thermal expansion therebetween. Thus, a material can be selected that thermally expands at a rate similar to that of a chosen sealing cover. It is also anticipated that texturing can be provided on first surface 22, 220 and/or on raised rim portions 54, 540 to further promote reliable adhesion to a sealing cover. In some embodiments, however, the plurality of well inserts 14, 140 can be made of a material that provides desirable thermal qualities for PCR or other analytical methods.

In some embodiments, it should be understood that microplate base structure 12, 120 can be made of a metal, of a thermally conductive polymer, and/or of a material comprising a thermally conductive filler such as metal shavings and/or carbon particles.

In some embodiments, one or both of microplate base structure 12, 120 and the plurality of well inserts 14, 140 can comprise, at least in part, a thermally conductive material. In some embodiments, one or both of microplate base structure 12, 120 and the plurality of well inserts 14, 140 can be molded, at least in part, of a thermally conductive material to define a cross-plane thermal conductivity of at least about 0.30 W/mK or, in some embodiments, at least about 0.58 W/mK. Such thermally conductive materials can provide a variety of benefits, such as, in some cases, improved heat distribution throughout one or both of microplate base structure 12, 120 and the plurality of well inserts 14, 140, so as to afford reliable and consistent heating and/or cooling of assay 1000. In some embodiments, this thermally conductive material comprises a plastic formulated for increased thermal conductivity. Such thermally conductive materials can comprise, for example, and without limitation, at least one of polypropylene, polystyrene, polyethylene, polyethyleneterephthalate, styrene, acrylonitrile, cyclic polyolefin, syndiotactic polystyrene, polycarbonate, liquid crystal polymer, conductive fillers in plastic materials, combinations thereof, and the like. In some embodiments, such thermally conductive materials include those known to those skilled in the art with a melting point greater than about 130°C. For example, one or both of microplate base structure 12, 120 and the plurality of well inserts 14, 140 can be made of commercially available materials such as RTP199X104849, COOLPOLY E1201 (available from Cool Polymers, Inc., Warwick, Rhode Island), or, in some embodiments, a mixture of about 80% RTP199X104849 and 20% polypropylene.

In some embodiments, one or both of microplate base structure 12, 120 and the plurality of well inserts 14, 140 can comprise at least one carbon filler, such as carbon, carbon black, carbon fibers, graphite, impervious graphite, and mixtures or combinations thereof. In some cases, graphite is used and has an advantage of being readily and cheaply available in a variety of shapes and sizes. One skilled in the art will recognize that impervious graphite can be non-porous and solvent-resistant. Progressively refined grades of graphite or impervious graphite can provide, in some cases, a more consistent thermal conductivity.

In some embodiments, one or more thermally conductive ceramic fillers can be used, at least in part, to form one or both of microplate base structure 12, 120 and the plurality of well inserts 14, 140. In some embodiments, the thermally conductive ceramic fillers can comprise boron nitrate, boron nitride, boron carbide, **silicon nitride, aluminum nitride, combinations thereof, and the like.**

In some embodiments, one or both of microplate base structure 12, 120 and the plurality of well inserts 14, 140 can comprise an inert thermally conductive coating. In some embodiments, such coatings can include metals or metal oxides, such as copper, nickel, steel, silver, platinum, gold, copper, iron, titanium, alumina, magnesium oxide, zinc oxide, titanium oxide, alloys thereof, combinations thereof, and the like.

In some embodiments, one or both of microplate base structure 12, 120 and the plurality of well inserts 14, 140 comprises a mixture of a thermally conductive material and other materials, such as non-thermally conductive materials or insulators. In some embodiments, the non-thermally conductive material comprises glass, ceramic, silicon, standard plastic, or a plastic compound, such as a resin or polymer, and mixtures thereof, to define a cross-plane thermal conductivity of below about 0.30 W/mK. In some embodiments, the thermally conductive material can be mixed with liquid crystal polymers (LCP), such as wholly aromatic polyesters, aromatic-aliphatic polyesters, wholly aromatic poly(ester-amides), aromatic-aliphatic poly(ester-amides), aromatic polyazomethines, aromatic polyester-carbonates, blends or mixtures thereof, and the like. In some embodiments, the composition of one or both of microplate base structure 12, 120 and the plurality of well inserts 14, 140 can comprise from about 30% to about 60%, or from about 38% to about 48% by weight, of the thermally conductive material.

## Claims

1. A microplate assembly (10) for performing an analytical method on an assay, said microplate assembly (10) comprising:
a microplate base structure (12, 120) having a plurality of apertures formed therethrough and a depression (520, 560) formed about each of the plurality of apertures in the microplate base structure (12, 120), said microplate base structure (12, 120) being made of a first material;
a plurality of well inserts (14, 140) molded to said microplate base structure (12, 120), each of said plurality of well inserts (14, 140) having an open top portion and being adapted to receive an assay and a rim portion (480) extending around a periphery of the open top portion of each of the plurality of well inserts (14, 140), each of the rim portions (480) being received within a corresponding one of the depressions (520, 560) formed in the microplate base structure (12, 120), said plurality of well inserts (14, 140) each being made of a second material.

2. The microplate assembly (10) according to claim 1, wherein the microplate base structure (12, 120) further comprises an upper surface and a lower surface, each of said apertures extends between a first entrance defined in the upper surface and a second entrance defined in said lower surface, each of the well inserts (14, 140) further comprises a rim portion (480) surrounding the open top portion, and the lower surface of the microplate base structure (12, 120) is attached to the rim portions (480) of the well inserts (14, 140).

3. The microplate assembly (10) according to claim 2, wherein each of the well inserts (14, 140) further comprises a first body portion extending from the lower surface of the microplate base structure (12, 120) to a second body portion extending from the first body portion to a closed bottom end, the first body portion has a first wall thickness, the second well portion has a second wall thickness, and the first wall thickness is no greater than the second wall thickness.

4. The microplate assembly (10) according to claim 2, wherein each of the well inserts (14, 140) further comprises a first body portion extending from the lower surface of the microplate base structure (12, 120) to a second body portion that extends from the first body portion to a closed bottom end, and the first body portion has a uniform thickness.

5. The microplate assembly (10) according to claim 2, wherein the first material comprises glass-filled polyolefin and the second material comprises polyolefin.

6. The microplate assembly (10) according to claim 2, wherein generally planar portion of the lower surface of the microplate base structure (12, 120) is directly molded to the rim portions (480) of the well inserts (14, 140).

7. The microplate assembly (10) according to claim 1, further comprising:
a retaining barb extending from each of the plurality of well inserts (14, 140) engagable with the microplate base structure (12, 120) for retaining each of the plurality of well inserts (14, 140) in the plurality of apertures.

8. The microplate assembly (10) according to claim 1, wherein the first material is different than the second material.

9. A method of making a microplate assembly (10) useful for performing an analytical method on an assay, comprising:
providing a plurality of well inserts (14, 140) and a microplate base structure (12, 120) attached thereto, wherein the microplate base structure (12, 120) has an upper surface, a lower surface,
a plurality of apertures formed therethrough, and a depression (520, 560) formed about each of the plurality of apertures in the microplate base structure (12, 120), the microplate base structure (12, 120) comprises a first material, each of the plurality of well inserts (14, 140) has an open top portion and is adapted to receive an assay, the well inserts (14, 140) each comprise a rim portion (480) surrounding the open top portion and extending around a periphery of the open top portion of each of the plurality of well inserts (14, 140), each of the rim portions (480) being received within a corresponding one of the depressions (520, 560) formed in the microplate base structure (12, 120), and the lower surface of the microplate base structure (12, 120) is directly molded to the rim portions (480) of the well inserts (14, 140) by manufacturing the well inserts (14, 140) and the microplate base structure (12, 120) by multi-component insert molding.

10. The method of claim 9, further comprising molding the well inserts (14, 140) first and subsequently molding the microplate base structure (12,120).

11. The method of claim 9, wherein the first material comprises glass- filled polyolefin and the second material comprises non-filled polyolefin.

## Patentansprüche

1. Mikroplattengruppe (10) zur Ausführung eines analytischen Verfahrens an einem Assay, umfassend:
eine Grundstruktur (12,120), die eine Mehrzahl dadurch gebildeter Öffnungen sowie eine um jede der mehreren Öffnungen in der Grundstruktur (12,120) gebildete Vertiefung (520,560) aufweisen, wobei die Grundstruktur (12,120) aus einem ersten Material besteht;
eine Mehrzahl auf der Grundstruktur (12,120) geformter Muldeneinlagen (14,140), wobei jede einen offenen Oberteil aufweist und geeignet ist, einen Assay aufznehmen, sowie einen Randteil (480), der sich um eine Peripherie des offenen Oberteils jeder der Mehrzahl der Muldeneinlagen (14, 140) herum erstreckt, wobei jeder der Randteile (480) von einer entsprechenden der in der Grundstruktur (12, 120) gebildeten Vertiefungen (520, 560) aufgenommen wird, wobei die Mehrzahl der Muldeneinlagen (14,140) jeweils aus einem zweiten Material bestehen.

2. Mikroplattengruppe (10) nach Anspruch 1, wobei die Grundstruktur (12, 120) ferner eine obere und eine untere Fläche umfasst, wobei sich jede der Öffnungen zwischen einer in der oberen Fläche definierten ersten Eintrittsöffnung und einer in der unteren Fläche definierten zweiten Eintrittsöffnung erstreckt, wobei jede der Muldeneinlagen (14,140) ferner einen Randteil (480) umfasst, der den offenen Oberteil umgibt, und die untere Fläche der Grundstruktur (12, 120) mit den Randteilen (480) der Muldeneinlagen (14, 140) verbunden ist.

3. Mikroplattengruppe (10) nach Anspruch 2, wobei jede der Muldeneinlagen (14, 140) ferner einen ersten Hauptabschnitt aufweist, der sich von der unteren Fläche der Grundstruktur (12, 120) zu einem sich vom ersten Hauptabschnitt zu einem geschlossenen unteren Ende erstreckenden zweiten Hauptabschnitt erstreckt, wobei der erste Hauptabschnitt eine erste Wandstärke, und der zweite Hauptabschnitt eine zweite Wandstärke aufweist, und die erste Wandstärke nicht größer ist als die zweite Wandstärke.

4. Mikroplattengruppe (10) nach Anspruch 2, wobei jede der Muldeneinlagen (14,140) ferner einen ersten Hauptabschnitt aufweist, der sich von der unteren Fläche der Grundstruktur (12,120) zu einem sich vom ersten Hauptabschnitt zu einem geschlossenen unteren Ende erstreckenden zweiten Hauptabschnitt erstreckt und der erste Hauptabschnitt eine einheitliche Stärke aufweist.

5. Mikroplattengruppe (10) nach Anspruch 2, wobei das erste Material glasgefülltes Polyolefin und das zweite Material Polyolefin umfasst.

6. Mikroplattengruppe (10) nach Anspruch 2, wobei ein generell planarer Teil der unteren Fläche der Grundstruktur (12,120) auf den Randteilen (480) der Muldeneinlagen (14,140) direkt geformt ist.

7. Mikroplattengruppe (10) nach Anspruch 1, ferner umfassend:
einen sich von jeder der mehreren Muldeneinlagen (14,140) erstreckenden Widerhaken, der mit der Grundstruktur (12, 120) zur Befestigung jeder der mehreren Muldeneinlagen (14,140) in den mehreren Öffnungen koppelbar ist.

8. Mikroplattengruppe (10) nach Anspruch 1, wobei sich das erste Material vom zweiten Material unterscheidet.

9. Verfahren zur Herstellung einer zur Ausführung eines analytischen Verfahrens an einem Assay geeigneten Mikroplattengruppe (10), umfassend:
Vorsehen einer Mehrzahl Muldeneinlagen (14,140) sowie einer damit verbundenen Grundstruktur (12,120), wobei die Grundstruktur (12,120) eine obere Fläche, eine untere Fläche, eine Mehrzahl dadurch gebildeter Öffnungen sowie eine um jede der mehreren Öffnungen in der Grundstruktur (12,120) gebildete Vertiefung (520,560) aufweist, wobei die Grundstruktur (12,120) ein erstes Material umfasst, jede der mehreren Muldeneinlagen (14,140) einen offenen Oberteil aufweist und zur Aufnahme eines Assays geeignet ist, die Muldeneinlagen (14,140) jeweils einen den offenen Oberteil jeder der mehreren Muldeneinlagen (14,140) umgebenden und sich um eine Peripherie des offenen Oberteils jeder der mehreren Muldeneinlagen (14,140) erstreckenden Randteil (480) umfasst, wobei jeder der Randteile (480) von einer entsprechenden der in der Grundstruktur (12,120) gebildeten Vertiefungen (520,560) aufgenommen wird, und wobei die untere Fläche der Grundstruktur (12,120) direkt auf den Randteilen (480) der Muldeneinlagen (14,140) dadurch geformt ist, dass die Muldeneinlagen (14,140) und die Grundstruktur (12,120) im Wege des Mehrkomponenten-Insert Molding hergestellt werden.

10. Verfahren nach Anspruch 9, ferner umfassend das Formen der Muldeneinlagen (14,140) zuerst mit anschließendem Formen der Grundstruktur (12,120).

11. Verfahren nach Anspruch 9, wobei das erste Material glasgefülltes Polyolefin und das zweite Material nicht gefülltes Polyolefin umfasst.

## Revendications

1. Ensemble microplaque (10) pour réaliser un procédé analytique sur un dosage, ledit ensemble microplaque (10) comprenant :
- une structure de base de microplaque (12, 120) ayant une pluralité d'ouvertures formées à travers celle-ci et un creux (520, 560) formé autour de chacune de la pluralité d'ouvertures dans la structure de base de microplaque (12, 120), ladite structure de base de microplaque (12, 120) étant faite d'une première matière ;
- une pluralité d'inserts de puits (14, 140) moulés dans ladite structure de base de microplaque (12, 120), chacun de ladite pluralité d'inserts de puits (14, 140) ayant une partie supérieure ouverte et étant apte à recevoir un dosage et une partie rebord (480) s'étendant autour d'une périphérie de la partie supérieure ouverte de chacun de la pluralité d'inserts de puits (14, 140), chacune des parties rebords (480) étant reçue dans l'un correspondant des creux (520, 560) formés dans la structure de base de microplaque (12, 120), ladite pluralité d'inserts de puits (14, 140) étant chacun fait d'une seconde matière.

2. Ensemble microplaque (10) selon la revendication 1, dans lequel la structure de base de microplaque (12, 120) comprend en outre une surface supérieure et une surface inférieure, chacune desdites ouvertures s'étend entre une première entrée définie dans la surface supérieure et une seconde entrée définie dans ladite surface inférieure, chacun des inserts de puits (14, 140) comprend en outre une partie rebord (480) entourant la partie supérieure ouverte, et la surface inférieure de la structure de base de microplaque (12, 120) est fixée aux parties rebords (480) des inserts de puits (14, 140).

3. Ensemble microplaque (10) selon la revendication 2, dans lequel chacun des inserts de puits (14, 140) comprend en outre une première partie corps s'étendant de la surface inférieure de la structure de base de microplaque (12, 120) à une seconde partie corps s'étendant de la première partie corps à une extrémité inférieure fermée, la première partie corps a une première épaisseur de paroi, la seconde partie de puits a une seconde épaisseur de paroi, et la première épaisseur de paroi n'est pas supérieure à la seconde épaisseur de paroi.

4. Ensemble microplaque (10) selon la revendication 2, dans lequel chacun des inserts de puits (14, 140) comprend en outre une première partie corps s'étendant de la surface inférieure de la structure de base de microplaque (12, 120) à une seconde partie corps qui s'étend de la première partie corps à une extrémité inférieure fermée, et la première partie corps a une épaisseur uniforme.

5. Ensemble microplaque (10) selon la revendication 2, dans lequel la première matière comprend une polyoléfine chargée de verre et la seconde matière comprend une polyoléfine.

6. Ensemble microplaque (10) selon la revendication 2, dans lequel une partie généralement plane de la surface inférieure de la structure de base de microplaque (12, 120) est directement moulée aux parties rebords (480) des inserts de puits (14, 140).

7. Ensemble microplaque (10) selon la revendication 1, comprenant en outre :
- une barbe de retenue s'étendant à partir de chacun de la pluralité d'inserts de puits (14, 140), apte à venir en prise avec la structure de base de microplaque (12, 120) pour retenir chacun de la pluralité d'inserts de puits (14, 140) dans la pluralité d'ouvertures.

8. Ensemble microplaque (10) selon la revendication 1, dans lequel la première matière est différente de la seconde matière.

9. Procédé de fabrication d'un ensemble microplaque (10) utile pour réaliser un procédé analytique sur un dosage, comprenant :
- disposer une pluralité d'inserts de puits (14, 140) et une structure de base de microplaque (12, 120) fixée à ceux-ci, la structure de base de microplaque (12, 120) ayant une surface supérieure, une surface inférieure, une pluralité d'ouvertures formées à travers celle-ci et un creux (520, 560) formé autour de chacune de la pluralité d'ouvertures dans la structure de base de microplaque (12, 120), la structure de base de microplaque (12, 120) comprenant une première matière, chacun de la pluralité d'inserts de puits (14, 140) ayant une partie supérieure ouverte et étant apte à recevoir un dosage, les inserts de puits (14, 140) comprenant chacun une partie rebord (480) entourant la partie supérieure ouverte et s'étendant autour d'une périphérie de la partie supérieure ouverte de chacun de la pluralité d'inserts de puits (14, 140), chacune des parties rebords (480) étant reçue à l'intérieur de l'un correspondant des creux (520, 560) formés dans la structure de base de microplaque (12, 120), et la surface inférieure de la structure de base de microplaque (12, 120) étant directement moulée aux parties rebords (480) des inserts de puits (14, 140) par fabrication des inserts de puits (14, 140) et de la structure de base de microplaque (12, 120) par moulage d'insert multi-composants.

10. Procédé selon la revendication 9, comprenant en outre le moulage des inserts de puits (14, 140) en premier et ensuite le moulage de la structure de base de microplaque (12, 120).

11. Procédé selon la revendication 9, dans lequel la première matière comprend une polyoléfine chargée de verre et la seconde matière comprend une polyoléfine non chargée.
